# FASCICULE DE BREVET EUROPEEN

(11) **EP 0 993 926 B1**
(45) Date de publication et mention de la délivrance du brevet: **11.09.2002**
(21) Numéro de dépôt: 99440273.3
(22) Date de dépôt: 12.10.1999
(51) Int. Cl.: B29C 45/44, B29C 45/40

(54) **Dispositif de maintien à la sortie du moule d'une pièce en matière plastique injectée lors de l'extraction des cales moulantes**
Vorrichtung zum Halten eines spritzgegossenen Kunststoffgegenstandes während der Entfernung von Formteilen
Device for maintaining a plastic injection moulded article during extraction of forming parts

(30) Priorité: 16.10.1998 FR 9813093
(43) Date de publication de la demande: 19.04.2000
(73) Titulaire: REHAU S.A., 57340 Morhange (FR)
(72) Inventeur: Reb, Guy, 57990 Hundling (FR)
(74) Mandataire: Metz, Paul

(56) Documents cités:
- PATENT ABSTRACTS OF JAPAN vol. 18, no. 572 (M-1696), 2 novembre 1994 (1994-11-02) -& JP 06 210683 A (SEKISUI CHEM CO LTD), 2 août 1994 (1994-08-02)
- PATENT ABSTRACTS OF JAPAN vol. 16, no. 471 (M-1318), 30 septembre 1992 (1992-09-30) -& JP 04 168019 A (TOYODA GOSEI CO LTD), 16 juin 1992 (1992-06-16) -& DATABASE WPI Week 9230 Derwent Publications Ltd., London, GB; AN 92-247214 XP002128180
- PATENT ABSTRACTS OF JAPAN vol. 97, no. 8, 29 août 1997 (1997-08-29) & JP 09 109194 A (SEKISUI CHEM CO LTD), 28 avril 1997 (1997-04-28)

## Description

L'invention se rapporte à un dispositif de maintien à la sortie du moule d'une pièce moulée en matière plastique injectée présentant des structures en caisson surmontées d'éléments de clipsage en saillie nécessitant l'extraction d'une cale de moulage pour chaque caisson.

Le démoulage des pièces longues présentant des structures de clipsage en saillie ou des clips intégrés existant sur la face intérieure de la pièce représente une réelle difficulté en raison des efforts nécessaires pour vaincre les forces élastiques de retenue rencontrées lors de l'extraction des cales moulantes hors des poches de moulage.

Une des pièces visées par l'invention est du type baguette de ceinture de caisse ou bande décorative pour véhicule automobile telle que décrite dans la demande française publiée en FRANCE sous n° 2 742 711 au nom du déposant.

Jusqu'à présent les cales de moulage étaient extraites des poches des clips rapportés en maintenant la pièce moulée par des pinces ou des équerres.

Or, par la création de nouvelles formes en particulier de structures en caisson supportant les clips intégrés, les surfaces de contact des cales moulantes avec les structures adjacentes sont plus étendues. De ce fait, et par l'existence d'une forme en contre-dépouille, les efforts à développer pour arriver à l'extraction des cales moulantes sont devenus nettement plus importants et le seul maintien des pièces moulées par des pinces marquerait trop fortement la matière à l'endroit du pincement jusqu'à rendre les pièces moulées esthétiquement inacceptables. De plus, et de façon déterminante, les efforts de retenue seraient insuffisants.

La présente invention a pour but de maintenir fortement la pièce moulée, notamment dans le sens longitudinal, lors de l'extraction des cales moulantes hors des clips intégrés et des caissons les supportant tout en tenant compte du retrait.

On connaît par ailleurs des dispositifs de moulage de pièces présentant une partie en saillie. Ainsi, on connaît par exemple les brevets TOYODA n° JP 04168019A et SEKISUI CHEM n° JP 09109194A.

Le dispositif TOYODA consiste en deux noyaux de moule reliés par un ressort comprimable, les deux noyaux étant chacun actionnés à l'aide d'une tige s'étendant dans une direction différente. Le premier noyau se trouve au contact de l'article moulé du côté de la partie saillante, tandis que le deuxième enserre la partie saillante de l'article moulé. Lors du démoulage, le premier noyau de moule est actionné au moyen de la tige afin d'être libéré. Lors de cette opération, le deuxième noyau de moule bouge d'un seul bloc avec l'article moulé ou sans glisser par rapport à lui, ce qui empêche le blanchissement et la déformation de la partie en saillie.

Le brevet SEKISUI CHEM n° JP 09109194A divulgue un procédé permettant de démouler de façon sûre une partie saillante présentant un évidemment dans le cas où une dépouille ne peut être formée dans la partie évidée. Ce procédé utilise deux noyaux de moule positionnés sur la surface de l'article moulé au contact de la partie saillante. Le premier de ces deux noyaux est positionné sur un côté de la surface de la partie saillante et comporte une section en saillie s'adaptant à l'évidemment de celle-ci, tandis que le deuxième de ces deux noyaux est positionné de l'autre côté de la surface de la partie saillante et comporte une partie en crochet s'étendant sur le dessus de la partie saillante. Cette partie en crochet réalise, à l'aide de son rebord situé de l'autre côté de la pièce, une butée qui maintient la partie saillante plaquée contre le noyau. Ainsi, lorsque le premier noyau est libéré au cours du démoulage, le deuxième noyau maintient la partie saillante contre lui et la protège de l'arrachage dans la direction de retrait avant d'être libéré à son tour.

Un autre dispositif permettant de démouler une pièce en saillie a été décrit dans le brevet SEKISUI CHEM n° JP 06210683A. Ce dispositif comporte une collerette de maintien cylindrique moulée en même temps que la pièce et dans laquelle une tige d'éjection est enfoncée. Cette collerette forme une retenue pour la tige d'éjection afin d'équilibrer les forces dynamiques exercées sur la pièce lors de la sortie du moule de la partie en saillie.

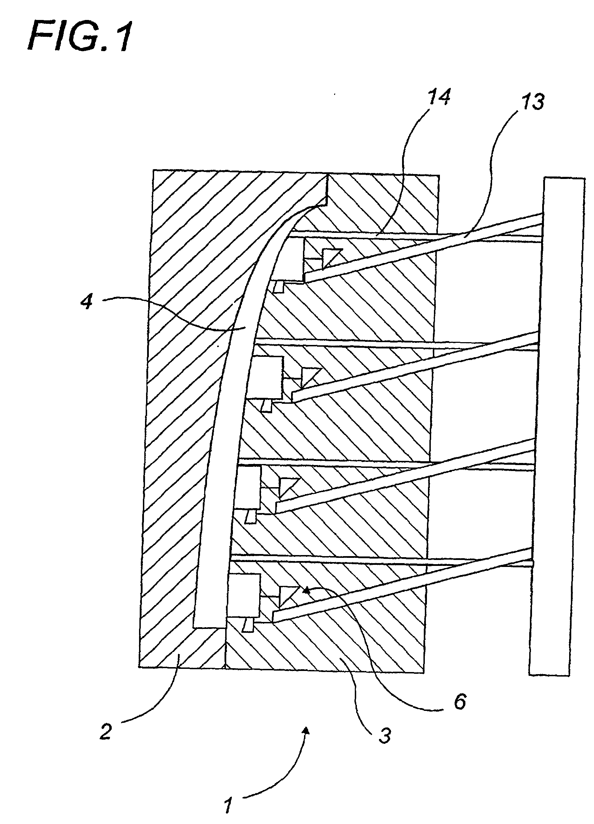

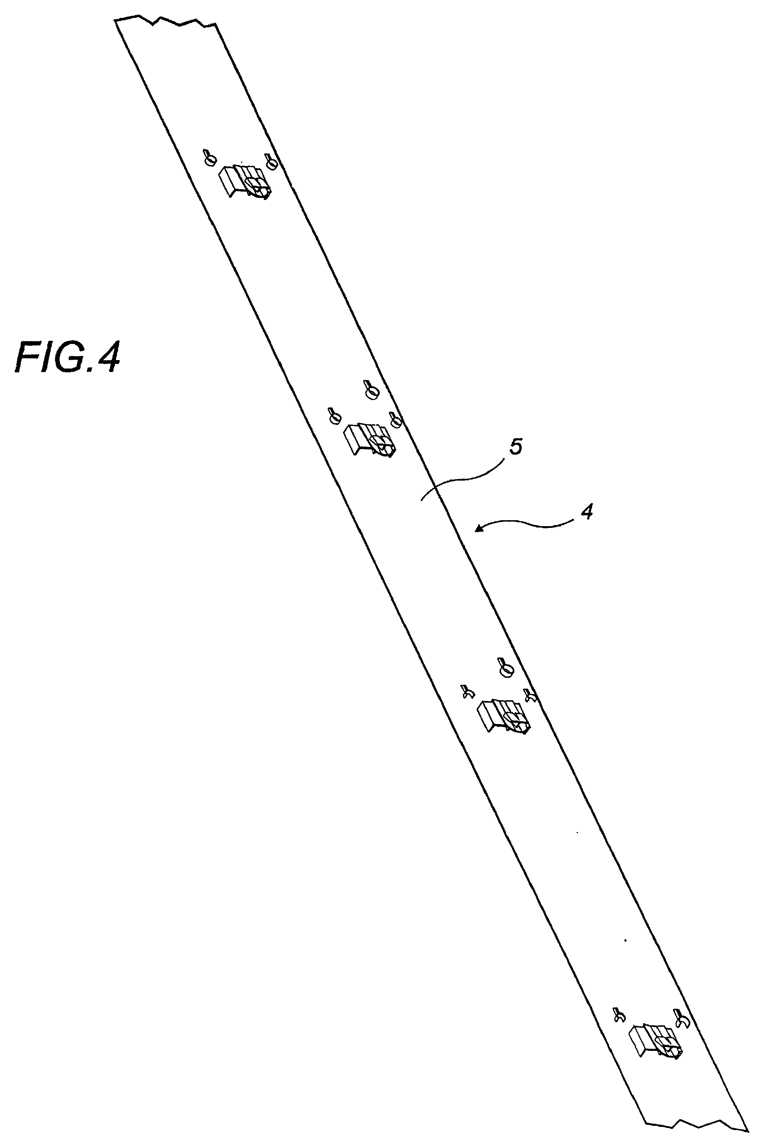

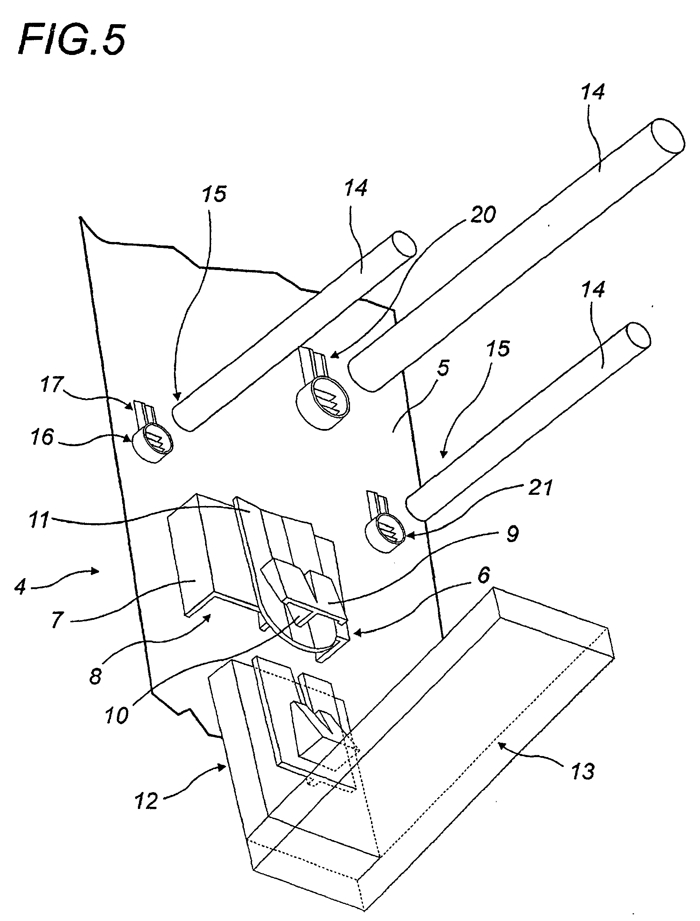

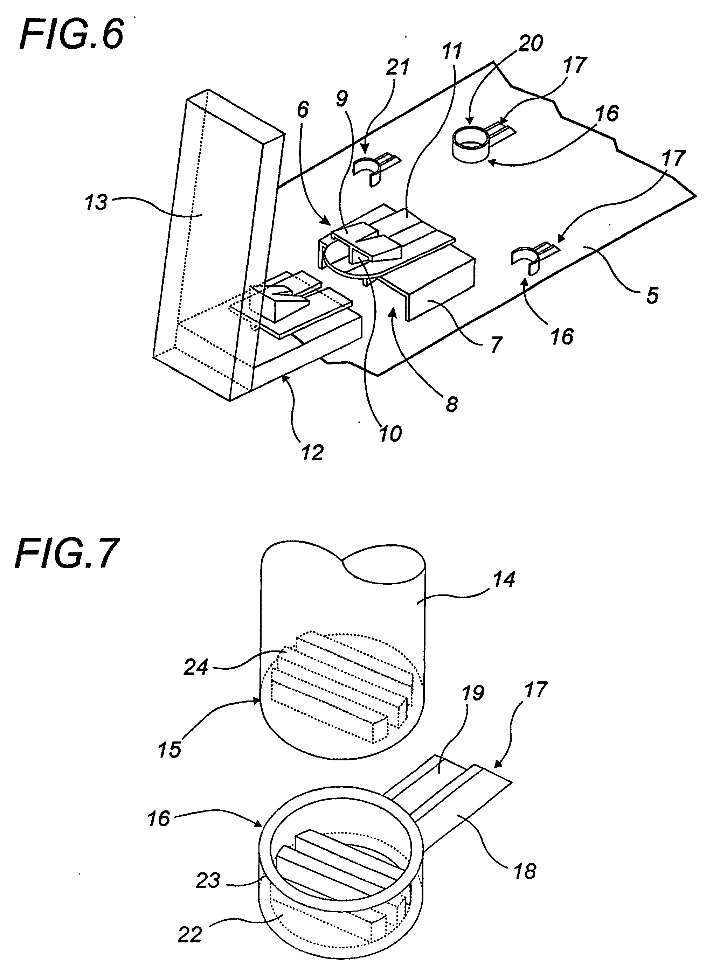

D'autres caractéristiques et avantages de la présente invention sont consignés dans la description qui suit effectuée à titre non-limitatif, en référence aux dessins accompagnants sur lesquels :
. les figures 1, 2 et 3 sont des vues en coupe respectivement pendant les phases,
   . de moulage,
   . d'ouverture,
   . d'extraction ;
. la figure 4 est une vue générale en perspective de la pièce moulée sur la majorité de sa longueur prise comme exemple descriptif ;
. la figure 5 est une vue de détail en perspective au niveau d'une zone de maintien choisie dans une demi-partie de la longueur de la pièce moulée ;
. la figure 6 est une vue de détail en perspective au niveau d'une zone de maintien choisie dans l'autre demi-partie de la longueur de la pièce moulée ;
. le figure 7 est une vue de détail en perspective d'une structure de maintien formée d'une alvéole en face de l'extrémité d'une tige d'éjection.

La présente invention se rapporte à une association de moyens permettant de réaliser toutes les phases de démoulage de la pièce et le maintien de celle-ci lors de l'extraction des cales moulantes.

L'ensemble des opérations liées à la sortie du moule d'une telle pièce sont représentées sur les figures 1 à 3.

Dans un moule 1 à deux demi-coquilles 2 et 3 est moulée, de préférence par injection, une pièce allongée 4 par exemple une baguette ou une bande décorative de ceinture de caisse pour véhicules automobiles ou toute autre forme analogue présentant le même problème de maintien à l'extraction des cales moulantes.

Cette baguette ou bande décorative 4 comporte sur sa face intérieure ou arrière 5 des structures d'accrochage ou de clipsage 6 intégrées à la face supérieure d'un caisson 7 délimitant une cavité 8 ouverte à ses extrémités. Ces structures sont destinées au montage de la bande décorative 4 directement sur des ouvertures avec fente prévues dans la tôle de la carrosserie au niveau des portes ou des bas de caisse.

Ces structures d'accrochage ou de clipsage 6 intégrées aux caissons 7 existent en plusieurs endroits sur toute la longueur du corps de la baguette ou de la bande décorative 4 de manière à garantir un maintien uniforme et solide de la pièce moulée contre la tôle de la carrosserie.

Les structures d'accrochage ou de clipsage 6 sont maintenues à une distance suffisante de la face arrière de la baguette ou de la bande décorative 4 car formées dans la paroi supérieure du caisson 7 dont la hauteur représente ce décalage. Cette distance permet à ces structures 6 de venir s'engager directement dans les ouvertures de la tôle et d'y être ancrées par un verrouillage, par exemple du type serrure. Cette coopération de moyens permet le montage et la fixation avec verrouillage de la bande décorative sur la carrosserie par un simple mouvement de coulissement.

Ces structures d'accrochage ou de clipsage 6 présentent une aile de blocage 9 légèrement inclinée, réunie par une âme centrale 10 à un plan 11 de glissement et de contact contre la tôle de la carrosserie. Ces deux conformations coopèrent de part et d'autre de la tôle pour assurer le maintien durable de la pièce contre la carrosserie du véhicule automobile.

A chaque fois, l'ensemble est porté par la paroi supérieure du caisson dont la forme générale est en tunnel délimitant la cavité 8 constituant un volume récepteur occupé pour une cale moulante 12 dont l'exemple de forme correspondant à la réalisation représentée apparaît sur les figures 5 et 6.

Ce pont de matière est de hauteur suffisante pour maintenir la structure d'accrochage à distance de la face intérieure de la baguette ou bande décorative 4 d'une valeur rattrappant la flèche de concavité de la bande décorative en vue de permettre l'accrochage sur la tôle de la carrosserie du véhicule.

Chaque cavité 8 délimitée par le caisson 7 est occupée par une cale moulante 12 portée par l'extrémité d'une tige d'extraction 13.

L'éjection de la pièce moulée 4 du moule et son maintien ultérieur sont réalisés à l'aide de tiges d'éjection et de maintien 14 dont les extrémités 15 sont emprisonnées dans des alvéoles telles que 16 à corps cylindrique ouvert ou fermé et rigidifié localement extérieurement par au moins à chaque fois un bloc de renforcement 17 formé par exemple d'au moins deux nervures-gousset longitudinales de renforcement telles que 18 et 19 disposées du côté opposé à la force d'extraction.

Une alvéole type est représentée en détail sur la figure 7. Elles existent dans chacune des zones de maintien mais de préférence à chaque fois selon deux tailles différentes, l'une grande 20 et l'autre petite 21, mais de forme générale identique.

Elles présentent un corps cylindrique formant une cavité cylindrique d'encastrement à fond 22 nervuré par des cannelures transversales 23 par exemple en relief coopérant avec des cannelures complémentaires à l'extrémité 15 des tiges 14.

Comme on peut le voir sur les figures 4 et 5, ces alvéoles sont de deux tailles différentes et disposées à proximité des structures d'accrochage ou de clispsage 6. Elles jouent le rôle de points d'ancrage pour les tiges d'éjection 14 en vue du maintien de la pièce moulée lors du mouvement longitudinal d'extraction des cales de moulage 12.

Leur proximité à chaque fois de la structure d'accrochage ou de clipsage 6 et du caisson 7 adjacent permet une moindre déformation de ceux-ci lors de l'extraction des cales de moulage 12.

Les alvéoles de maintien ne sont pas identiques sur toute la longueur de la pièce. En effet, comme le montrent les figures 4 et 6, elles sont ouvertes sur l'étendue d'environ une demi-longueur de la pièce, ceci afin de compenser le retrait de la matière après abaissement de la température lors du démoulage et éviter ainsi toute déformation avec ou sans coincement.

Le maintien par l'extrémité des tiges d'éjection enfoncées dans les alvéoles de maintien avec les renforts complémentaires des nervures encastrées les unes dans les autres au niveau du fond est particulièrement fort. Il permet l'extraction des cales de moulage sans mouvement d'entraînement du corps de la bande décorative 4.

Le fonctionnement des moyens de maintien se réalise de la façon suivante.

A l'intérieur du moule, la pièce moulée 4 est maintenue par les tiges d'éjection 14 dont les extrémités sont entourées de matière par les corps des alvéoles. Les cales de moulage 12 sont présentes et maintenues par les tiges d'extraction dans les cavités 8 délimitées par les caissons 7.

Peu après la fin de l'injection, les deux demi-coquilles 2 et 3 constituant le moule 1 se séparent en libérant la pièce 4 de leur emprise. Celle-ci reste cependant accrochée par les cales de moulage et par les tiges d'extraction 13 qui les supportent et surtout par les tiges d'éjection et de maintien 14 dont les extrémités 15 sont prisonnières des alvéoles de maintien 16.

La phase finale intéressant l'invention consiste à extraire les cales moulantes 12 en maintenant la pièce moulée dans sa position d'éjection.

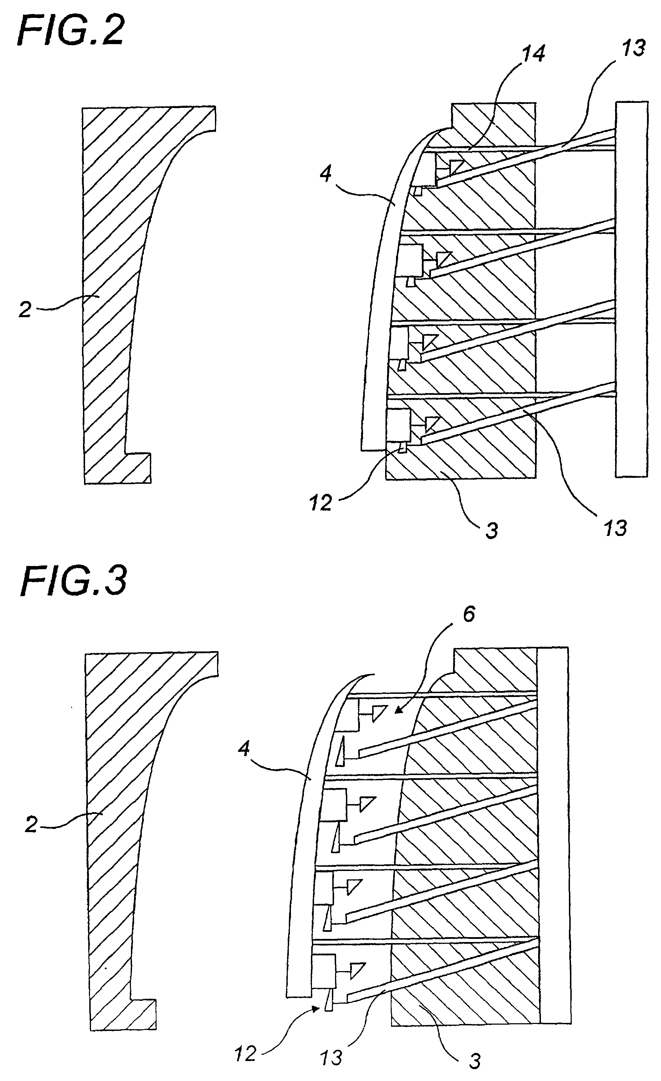

Pour ce faire, les tiges d'extraction de ces cales sont actionnées vers le bas (figures 2 et 3). Elles tirent la pièce moulée 4 fortement vers le bas lors de l'extraction des cales moulantes 12. Selon l'invention, la particularité des liaisons entre les alvéoles de maintien et les extrémités des tiges d'éjection permet de résister aux forces de traction vers le bas provenant du mouvement d'extraction des cales. De ce fait, durant cette phase de forte traction vers le bas, la pièce moulée 4 reste immobile car maintenue en position par les extrémités des tiges d'éjection 14 en prise dans les alvéoles et ceci malgré l'effort important nécessaire à l'extraction de chaque cale.

## Revendications

1. Dispositif de maintien à la sortie d'un moule (1) d'une pièce en matière plastique injectée notamment une bande décorative (4) de carrosserie pour véhicule automobile lors de l'extraction des cales (12) de moulage portées par des tiges d'extraction (13) et occupant chacune temporairement la cavité d'un caisson (7) prévu pour la mise à distance de la face arrière (5) de structures d'accrochage (6) à clips intégrés constituant notamment les éléments de fixation directe sur la tôle de la carrosserie, dispositif utilisant des tiges d'éjection et de maintien (14) de la pièce, et dans lequel les extrémités (15) des tiges d'éjection et de maintien (14) sont maintenues encastrées au moulage dans des alvéoles de maintien (16) à corps saillant de la même face arrière (5) que les caissons (7) portant les structures d'accrochage (6) à clips intégrés, lesdites alvéoles (16) présentant des structures de renfort (17) au droit de leur corps pour rigidifier dans la direction longitudinale de la force d'extraction la paroi du corps de chaque alvéole (16).

2. Dispositif de maintien selon la revendication 1 **caractérisé en ce qu'**il existe à proximité de chaque caisson (7) au moins deux alvéoles de maintien (20) et (21) différant en dimensions.

3. Dispositif de maintien selon la revendication 1 ou 2 **caractérisé en ce que** les alvéoles (16) de maintien présentent chacune un fond (22) en relief.

4. Dispositif de maintien selon la revendication précédente **caractérisé en ce que** les extrémités (15) des tiges d'éjection et de maintien (14) sont conformées selon un relief complémentaire à celui du fond (22) des alvéoles (16).

5. Dispositif de maintien selon l'une quelconque des revendications précédentes **caractérisé en ce que** le corps des alvéoles (16) et les extrémités (15) des tiges d'éjection et de maintien (14) sont cylindriques.

6. Dispositif de maintien selon l'une quelconque des revendications précédentes **caractérisé en ce que** les structures de renfort (17) sont au moins deux nervures-gousset (18) et (19) attenantes au corps de chaque alvéole.

7. Dispositif de maintien selon la revendication précédente **caractérisé en ce que** les structures de renfort (17) sont disposées longitudinalement et orientées vers le bas lorsque la pièce est debout c'est-à-dire dans sa position de sortie du moule.

8. Dispositif de maintien selon l'une quelconque des revendications précédentes **caractérisé en ce que** les-alvéoles (16) situées dans la demi-partie supérieure de la pièce (4) en position debout sont ouvertes vers le haut pour compenser les déplacements de retrait.

## Patentansprüche

1. Haltevorrichtung für ein spritzgegossenes Kunststoffteil, insbesondere eine Karosseriezierleiste (4) für Kraftfahrzeuge, bei Entnahme aus einer Gießform (1) während des Ausziehens von Formstücken (12), die von Ausziehstiften (13) getragen sind und jeweils zeitweise den Hohlraum eines Kastens (7) ausfüllen, der zum Bilden eines Abstands zwischen der Rückseite (5) und Befestigungsstrukturen (6) in Form integrierter Clips, die insbesondere als Elemente zum direkten Befestigen am Karosserieblech dienen, vorgesehen ist, wobei die Vorrichtung Auswerfer- und Haltestifte (14) für das Kunststoffteil aufweist, deren Enden (15) beim Gießen in Haltehülsen (16) mit vorspringendem Körper eingesteckt gehalten sind, die auf derselben Rückseite (5) wie die Kästen (7) angeordnet sind, die die Befestigungsstrukturen (6) in Form integrierter Clips aufweisen, und wobei die Haltehülsen (16) senkrecht zu ihrem Körper verlaufende Verstärkungsstrukturen (17) aufweisen, um die Wand des Körpers jeder Haltehülse (16) in der Längsrichtung der Ausziehkraft zu versteifen.

2. Haltevorrichtung nach Anspruch 1, **dadurch gekennzeichnet, daß** in der Nähe jedes Kastens (7) wenigstens zwei Haltehülsen (20, 21) angeordnet sind, die unterschiedliche Abmessungen aufweisen.

3. Haltevorrichtung nach Anspruch 1 oder 2, **dadurch gekennzeichnet, daß** die Haltehülsen (16) jeweils einen Boden (22) mit Reliefstruktur besitzen.

4. Haltevorrichtung nach Anspruch 3, **dadurch gekennzeichnet, daß** die Enden (15) der Auswerfer- und Haltestifte (14) Reliefstrukturen aufweisen, die komplementär zu der Reliefstruktur des Bodens (22) der Haltehülsen (16) ausgebildet sind.

5. Haltevorrichtung nach einem der vorangehenden Ansprüche, **dadurch gekennzeichnet, daß** der Körper der Haltehülsen (16) und die Enden (15) der Auswerfer- und Haltestifte (14) zylindrisch ausgebildet sind.

6. Haltevorrichtung nach einem der vorangehenden Ansprüche, **dadurch gekennzeichnet, daß** die Verstärkungsstrukturen (17) wenigstens aus zwei Stützrippen (18, 19) gebildet sind, die am Körper jeder Haltehülse angesetzt sind.

7. Haltevorrichtung nach Anspruch 6, **dadurch gekennzeichnet, daß** die Verstärkungsstrukturen (17) in Längsrichtung angeordnet und nach unten ausgerichtet sind, wenn das Kunststoffteil aufrecht steht, d.h. sich in seiner Stellung bei Entnahme aus der Form befindet.

8. Haltevorrichtung nach einem der vorangehenden Ansprüche, **dadurch gekennzeichnet, daß** die Haltehülsen (16), die in der oberen Hälfte des aufrecht stehenden Kunststoffteils (4) angeordnet sind, nach oben hin offen sind, um Schrumpfverschiebungen zu kompensieren.

## Claims

1. Device for retention of an injection moulded plastic part, particularly a decorative bodywork strip (4) for an automobile, at the outlet of a mould (1) during the extraction of the moulding wedges (12) borne by extraction rods (13) and each temporarily occupying the cavity of a box structure (7) provided for distancing the rear face (5) from catch structures (6) with integral clips which in particular constitute the elements for direct fixing on the sheet metal of the bodywork, the said device utilising rods for ejection and retention (14) of the part, and in which the ends (15) of the ejection and retention rods (14) are held embedded during moulding in retention cells (16) with a body projecting from the same rear face (5) as the box structures (7) bearing the catch structures (6) with integral clips, the said cells (16) having reinforcement structures (17) at right angles to their body in order to stiffen the wall of the body of each cell (16) in the longitudinal direction of the extraction force.

2. Retention device as claimed in Claim 1, **characterised in that** close to each box structure (7) there are at least two retention cells (20 and 21) which have different dimensions.

3. Retention device as claimed in Claim 1 or 2, **characterised in that** the retention cells (16) each have a raised base (22).

4. Retention device as claimed in the preceding claim, **characterised in that** the ends (15) of the ejection and retention rods (14) are shaped with a complementary relief to that of the base (22) of the cells (16).

5. Retention device as claimed in any one of the preceding claims, **characterised in that** the bodies of the cells (16) and the ends (15) of the ejection and retention rods (14) are cylindrical.

6. Retention device as claimed in any one of the preceding claims, **characterised in that** the reinforcement structures (17) are at least two gusset ribs (18 and 19) adjoining the body of each cell.

7. Retention device as claimed in the preceding claim, **characterised in that** the reinforcement structures are disposed longitudinally and oriented downwards when the part is upright, that is to say in its position of removal from the mould.

8. Retention device as claimed in any one of the preceding claims, **characterised in that** the cells (16) situated in the upper half of the part (4) in the upright position are open towards the top in order to compensate for shrinkage movements.
